# EUROPÄISCHE PATENTANMELDUNG

(11) **EP 0 851 595 A2**
(43) Veröffentlichungstag der Anmeldung: **01.07.1998**
(21) Anmeldenummer: 97120765.9
(22) Anmeldetag: 26.11.1997
(51) Int. Cl.: H04B 1/38

(54) **Haltevorrichtung für eine Kommunikationseinheit**

(30) Priorität: 18.12.1996 DE 19652826
(71) Anmelder: NOKIA MOBILE PHONES LTD., 02150 Espoo (FI)
(72) Erfinder: Ortscheid, Annett (geb.) Wilke, 44791 Bochum (DE); Weber, Rainer, 76337 Waldbronn (DE)
(74) Vertreter: Urner, Peter, Dipl.-Phys.

(57) **Zusammenfassung**

Eine Haltevorrichtung (1) nach der Erfindung für eine Kommunikationseinheit (33, 36) enthält ein Grundelement (2), einen am Grundelement (2) schwenkbar angelenkten Träger (7), der mittels Federkraft vom Grundelement (2) wegschwenkbar ist, und auf den sich die Kommunikationseinheit (33, 36) mit ihrem einen Ende gegen Anschlagmittel (110) aufschieben läßt, die die Kommunikationseinheit (33, 36) halten, und eine am Grundelement (2) vorhandene Verriegelungseinrichtung (27) zur Verriegelung des anderen Endes der Kommunikationseinheit (33, 36) bei gegen das Grundelement (2) verschwenktem Träger (7), wobei die Verriegelungseinrichtung (27) die Kommunikationseinheit (33, 36) gegen die Anschlagsmittel (110) drückt.

## Beschreibung

Die Erfindung bezieht sich auf eine Haltevorrichtung für eine Kommunikationseinheit. Letztere kann z. B. ein Mobiltelefon bzw. Handy oder ein Handapparat einer Mobiltelefonanlage sein, die diesen Handapparat und eine mit ihm z. B. über ein Kabel verbundene Sende-/Empfangsstation umfaßt.

Eine Haltevorrichtung der gattungsgemäßen Art für eine Kommunikationseinheit ist bereits allgemein bekannt. Sie weist jedoch eine geringe Benutzerfreundlichkeit und Betriebszuverlässigkeit auf.

Aus der DE 44 05 506 C2 ist eine Halterung für ein Mobiltelefon bekannt, bei der ein schwenkbarer Träger für ein Mobiltelefon an einem u-förmigen Grundelement angebracht ist. Der schwenkbare Träger weist eine Bodenplatte, von der Bodenplatte wegstehende Stützelemente und der Bodenplatte gegenüberliegende Haltelappen auf. Der Träger ist dabei so angeordnet, daß er mit seiner Bodenplatte zwischen den Schenkein des u-förmigen Grundelements verschwenkbar ist. In den Schenkeln des Grundelements ist eine Verriegelungseinrichtung untergebracht, die einander gegenüberliegende Rastnasen aufweist, die in entsprechende seitliche Ausnehmungen des Mobiltelefons eingreifen können.

Wird ein Mobiltelefon in den köcherförmigen Träger eingesetzt, so steht es mit seiner unteren Stirnseite auf den Stützflächen auf und wird zwischen der Bodenplatte und den Haltelappen gehalten. Sobald das Mobiltelefon dann zusammen mit dem Träger zwischen die Schenkel des u-förmigen Grundelements geschwenkt wird, rasten die daran vorgesehenen Rastnasen ein. Durch Betätigen einer entsprechenden Lösetaste wird das Mobiltelefon wieder freigegeben und vom federvorgespannten Träger nach oben geschwenkt.

Bei dieser bekannten Halterung ist das Mobiltelefon zwischen einer Vielzahl von Halteelementen gehalten, die jedoch nicht verhindern können, daß das Mobiltelefon in der bekannten Haltevorrichtung relativ zur Haltevorrichtung Schwingungen ausführt und dabei an den Halteelementen reibt, was zu unschönen Gebrauchsspuren führt.

Davon ausgehend liegt der Erfindung liegt die Aufgabe zugrunde, eine weitere Haltevorrichtung für eine Kommunikationseinheit zu schaffen, die bei hoher Benutzerfreundlichkeit eine verbesserte Betriebssicherheit aufweist.

Eine Haltevorrichtung nach der Erfindung für eine Kommunikationseinheit enthält ein Grundelement, einen am Grundelement schwenkbar angelenkten Träger, der mittels Federkraft vom Grundelement wegschwenkbar ist und auf den sich die Kommunikationseinheit mit ihrem einen Ende gegen Anschlagmittel aufschieben läßt, die die Kommunikationseinheit halten, und eine am Grundelement vorhandene Verriegelungseinrichtung zur Verriegelung des anderen Endes der Kommunikationseinheit bei gegen das Grundelement verschwenktem Träger, wobei die Verriegelungseinrichtung die Kommunikationseinheit gegen die Anschlagmittel drückt.

Durch die erfindungsgemäß vorgesehenen Anschlagmittel, die die Kommunikationseinheit im Träger halten und die mit der Verriegelungsvorrichung so zusammen wirken, daß eine 3. Fixierung der Kommunikationseinheit im Träger erreicht wird, wird gewährleistet, daß selbst bei starken Vibrationen die Oberfläche der Kommunikationseinheit, also beispielsweise eines Mobiltelefons nicht an der Halterung reiben kann. Dadurch werden unschöne Gebrauchsspuren an der Oberfläche der Kommunikationseinheit verhindert.

Weiter wird die Betriebszuverlässigkeit der Haltevorrichtung nach der Erfindung insbesondere dadurch erhöht, daß auch bei vom Grundelement weggeschwenktem Träger die Kommunikationseinheit sicher mit dem Trägerverbunden bleibt, bis sie von diesem abgenommen wird, so daß sich die Kommunikationseinheit nicht unbeabsichtigt von der Haltevorrichtung lösen kann. Dies führt auch zu einerverbesserten Benutzerfreundlichkeit.

Nach einer Ausgestaltung der Erfindung ist zwischen Grundelement und einem Boden des Trägers eine Druckfedereinrichtung angeordnet. Durch diese Druckfedereinrichtung kann bei Entriegelung der Verriegelungseinrichtung der Träger vom Grundelement weggeschwenkt werden und mit ihm die Kommunikationseinheit, so daß sie sich im verschwenkten Zustand des Trägers von diesem abnehmen läßt. Dabei bleibt die Kommunikationseinheit während des Verschwenkens des Trägers vom Grundelement weg sicher mit dem Träger verbunden, ohne daß die Gefahr besteht, daß sie sich unbeabsichtigt von der Haltevorrichtung löst und beschädigt wird bzw. Schaden anrichtet. Statt der Druckfedereinrichtung kann auch eine auf der Schwenkachse zwischen Grundelement und Träger angeordnete Schenkelfeder verwendet werden, durch die ebenfalls der Träger in Richtung vom Grundelement weg vorgespannt werden kann. Zu diesem Zweck könnte auch eine Blattfeder zwischen Träger und Grundelement zum Einsatz kommen.

Um ein zu schnelles Verschwenken des Trägers vom Grundelement weg zu verhindern, kann zwischen Träger und Grundelement eine Dämpfungseinrichtung geschaltet sein, die die Verschwenkbewegung des Trägers bis zu einem gewissen Grad herabsetzt.

Eine besonders zuverlässige und sichere Halterung der Kommunikationseinheit im Träger läßt sich erreichen, wenn als Anschlagsmittel zwei quer zur Längsrichtung und parallel zur Hauptebene der Kommunikationseinheit voneinander beabstandete Anschlagelemente vorgesehen sind, die vorzugsweise in seitlich in der Kommunikationseinheit vorgesehene Ausnehmungen eingreifen.

Hierdurch läßt sich eine breite Stützbasis für die Kommunikationseinheit schaffen, die insbesondere so ausgebildet werden kann, daß auch bei starken Vibrationen die Kommunikationseinheit sicher im Träger gehalten ist, selbst wenn sie sich in der nach oben geschwenkten Stellung befindet.

Nach einer anderen Ausgestaltung der Erfindung erstreckt sich wenigstens der Boden des Trägers bis nahe zur Verriegelungseinrichtung, so daß in jeder Verschwenkstellung des Trägers für einen sicheren Halt der mit ihm verbundenen Kommunikationseinheit gesorgt ist.

In Weiterbildung der Erfindung können in Richtung zur Verriegelungseinrichtung verlaufende Seitenwände des Trägers die Kommunikationseinheit zum Teil umgreifen. Dadurch wird für einen noch sicheren Halt der Kommunikationseinheit im Träger gesorgt. Zum Beispiel können freie Längskanten der Seitenwände auf der Kommunikationseinheit zu liegen kommen, so daß auch deren vom Träger abgewandte Oberfläche umfaßt wird. Zusätzlich können die Seitenwände mit nach innen weisenden Längsleisten versehen sein, um eine noch bessere Fixierung bzw. Halterung der Kommunikationseinheit am Träger zu erreichen.

Nach einer anderen Ausgestaltung der Erfindung greifen freie Längskanten der Seitenwände in seitliche Längsschlitze der Kommunikationseinheit ein, was zu einem relativ flachen Gesamtaufbau der Haltevorrichtung führt, da jetzt die Wände des Trägers nicht mehr oberhalb der Kommunikationseinheit zu liegen kommen.

Die Höhe der Seitenwände selbst kann in Richtung zum freien Ende des Trägerbodens abnehmen, was ein leichteres Verbinden der Kommunikationseinheit mit dem Träger oder ein Abnehmen der Kommunikationseinheit vom Träger ermöglicht.

In noch weiterer Ausgestaltung der Erfindung kann eine Stirnwand des Trägers eine bis zu ihrer freien Kante verlaufende Öffnung aufweisen, wobei diese Stirnwand im allgemeinen dazu dient, eine Begrenzung beim Aufsetzen der Kommunikationseinheit auf den Träger zu bilden. Durch die Öffnung kann dann jedoch eine Kabelverbindung hindurchgeführt werden, die mit demjenigen Stirnende der Kommunikationseinheit verbunden ist, mit dem diese auf den Träger zuweist. Da sich die Öffnung bis zur freien Kante der genannten Stirnwand erstreckt, läßt sich die Kommunikationseinheit leicht vom Träger abnehmen, ohne die Kabelverbindung lösen zu müssen.

Nach einer anderen vorteilhaften Weiterbildung der Erfindung besteht der Träger wenigstens aus dem Trägerboden, auf dessen vom Grundelement abgewandten Seiten eine sich in Richtung der Verriegelungseinrichtung erstreckende, schwalbenschwanzförmige Leiste angeordnet ist. Beim Aufschieben der Kommunikationseinheit auf den Träger greift dann diese schwalbenschwanzförmige Leiste in eine entsprechend passende Längsöffnung an der Unterseite der Kommunikationseinheit ein, so daß sich Kommunikationseinheit und Träger sicher miteinander verbinden lassen. Zur Begrenzung der Längsbewegung der Kommunikationseinheit relativ zum Träger kann die die schwalbenschwanzförmige Leiste aufnehmende Längsöffnung an der Unterseite der Kommunikationseinheit in ihrer Länge begrenzt sein.

Vorteilhafterweise kann das Grundelement im Bereich der Verriegelungseinrichtung eine Auflage für das andere Ende der Kommunikationseinheit aufweisen, so daß die Kommunikationseinheit beim Verschwenken des Trägers auf das Grundelement zu mit ihrem freien Ende gegen eine Anschlagfläche gefahren wird, um für eine sichere Verriegelung zu sorgen. Die Verriegelungseinrichtung kann dabei eine federnd vorgespannte Rastnase aufweisen, die dann, wenn Träger und Kommunikationseinheit vollständig auf das Grundelement zu verschwenkt worden sind, in eine stirnseitige Öffnung der Kommunikationseinheit eingreift und dieses damit sicher hält.

Besonders vorteilhaft ist es dabei, wenn die Rastnase in eine Rastausnehmung in der Stirnseite der Kommunikationseinheit eingreift, so daß die Rastnase zusammen mit den Anschlagelementen eine 3. Halterung für die Kommunikationseinheit bildet.

Hierbei ist es besonders vorteilhaft, daß die Kommunikationseinheit zumindest im Bereich des Trägers außer den als Anschlagmittel dienenden Anschlagklötzen keine weitere Berührung mit der Haltevorrichtung aufweist. Auch im Bereich der Rastnase können zusätzliche Berührungspunkte mit der Haltevorrichtung weitgehend vermieden werden. Insbesondere kann die Anschlagsfläche für die Kommunikationseinheit im Bereich der Verriegelungseinrichtung so ausgebildet sein, daß sie lediglich zur Ausrichtung der Kommunikationseinheit gegenüber der Rastnase dient, während die Kommunikationseinrichtung, nachdem die Rastnase in eine entsprechende Öffnung eingegriffen hat, von der Auflage geringfügig abgehoben wird, so daß sie nur noch von der Rastnase gehalten wird.

Mit Hilfe eines an der Verriegelungseinrichtung vorgesehenen Entriegelungsknopfs kann die Rastnase betätigt werden, um aus der genannten stirnseitigen Öffnung der Kommunikationseinheit herausgeführt zu werden. Der Träger kann dann vom Grundelement weggeschwenkt werden und mit ihm die Kommunikationseinheit, die dann vom Träger abgenommen werden kann.

Nach einer besonderen Ausgestaltung der Erfindung kann der Träger einen Steckverbinder zur Herstellung wenigstens einer elektrischen Verbindung zwischen ihm und der Kommunikationseinheit halten. Sobald die Kommunikationseinheit ihre Endstellung im Träger erreicht hat, liegt ein elektrischer Kontakt zwischen Steckverbinder und Kommunikationseinheit vor. Dabei wird der Steckverbinder z. B. in das stirnseitige Ende der Kommunikationseinheit eingeschoben. Über diesen Steckverbinder läßt sich eine Versorgungsspannung zur Kommunikationseinheit übertragen und ebenfalls ein Antennenanschluß mit ihr verbinden. Ist die Kommunikationseinheit ein Mobiltelefon bzw. Handy, kann es ständig nachgeladen und mit dem Antennenanschluß in Kontakt gehalten werden. Über das Antennenkabel werden üblicherweise Daten erhalten, die sich auch über das Ladekabel zu einer anderen Einrichtung als das Telefon übertragen lassen.

Dabei kann der Steckverbinder über ein Kabel mit einem Anschluß an der Haltevorrichtung verbunden sein, über den ein leichter Zugang zum Versorgungspotential sowie zur Antenne möglich ist. Der Anschluß selbst ist dann über weitere Leitungen mit Versorgungspotential bzw. der Antenne verbunden, die bei Installation der Haltevorrichtung gelegt werden.

Die Haltevorrichtung selbst kann z. B. in einem Kraftfahrzeug installiert werden, etwa im Bereich der Armlehne oder Mittelkonsole, so daß der Antennenanschluß dann mit der Kraftfahrzeugantenne verbunden wird, während sich das Ladepotential von einer im Kraftfahrzeug vorhandenen Ladestation abnehmen läßt.

Nach einer anderen Ausgestaltung der Erfindung kann die Haltevorrichtung aber auch einen elektrischen Anschluß aufweisen, mit dem die Kommunikationseinheit über ein Kabel fest verbunden ist. Bei der Kommunikationseinheit kann es sich in diesem Fall z. B. um einen Handapparat handeln, der über das Kabel mit einer von der Haltevorrichtung entfernt angeordneten Sende-/Empfangsstation verbunden ist. Im Falle eines Kraftfahrzeugs könnte sich diese Sende-/Empfangsstation irgendwo im Kraftfahrzeug befinden, beispielsweise im Kofferraum. Das Kabel würde dann nur dazu dienen, Information mit dem Festeinbau auszutauschen.

Wenn eine Kommunikationseinheit, beispielsweise ein Mobiltelefon über die Haltevorrichtung nicht nur mit einer Antenne und einer stärkeren Spannungsversorgung, beispielsweise einer Kraftfahrzeugbatterie verbunden werden soll sondern auch noch mit einer Funktionseinrichtung, wie beispielsweise einer Freisprechanlage, so ist es besonders vorteilhaft, wenn am Grundelement der Haltevorrichtung ein Schaltmittel vorgesehen ist, das eine über das Kabel mit der Kommunikationseinheit verbundene Funktionseinrichtung in Abhängigkeit von der Stellung einer im Träger angeordneten Kommunikationseinheit ein- oder ausschaltet. Als Schaltmittel kann dabei ein in der Haltevorrichtung angeordneter Schalter dienen, der entweder von einem Schaltzapfen am Träger oder von der Verriegelungseinrichtung beaufschlagt ist. Im letzteren Fall ist es besonders zweckmäßig, wenn die Verriegelungseinrichtung einen gemeinsamen mit der Rastnase verschenkbaren Hebel aufweist, der einen Schalter betätigt.

Ausführungsbeispiele der Erfindung werden nachfolgend unter Bezugnahme auf die Zeichnung im einzelnen erläutert. Es zeigen:
**Figur 1** eine erfindungsgemäße Haltevorrichtung mit hochgeschwenktem Träger ohne Mobiltelefon;
**Figur 2** die Haltevorrichtung nach Figur 1 mit heruntergeschwenktem Träger und Mobiltelefon;
**Figur 3** eine andere Haltevorrichtung nach der Erfindung mit heruntergeschwenktem Träger und einem von ihm aufgenommenen Handapparat einer aus Handapparat und Feststation bestehenden Mobiltelefonanlage;
**Figuren 4a bis 4c** unterschiedliche Querschnitte durch den Träger senkrecht zu seiner Längsrichtung;
**Figur 5** eine Explosionsdarstellung der Haltevorrichtung;
**Figur 6** einen Längsschnitt durch die erfindungsgemäße Haltevorrichtung mit hochgeschwenktem Träger;
**Figur 7** einen Längsschnitt durch die erfindungsgemäße Haltevorrichtung mit heruntergeschwenktem Träger;
**Figur 8** einen Längsschnitt durch eine weitere erfindungsgemäße Haltevorrichtung mit hochgeschwenktem Träger;
**Figur 9** einen Längsschnitt durch die Haltevorrichtung nach Figur 8 mit heruntergeschwenktem Träger; und
**Figur 10** einen Schnitt im wesentlichen nach Linie A-A in Figur 9.

In den verschiedenen Figuren der Zeichnung sind einander entsprechende Teile mit gleichen Bezugszeichen versehen.

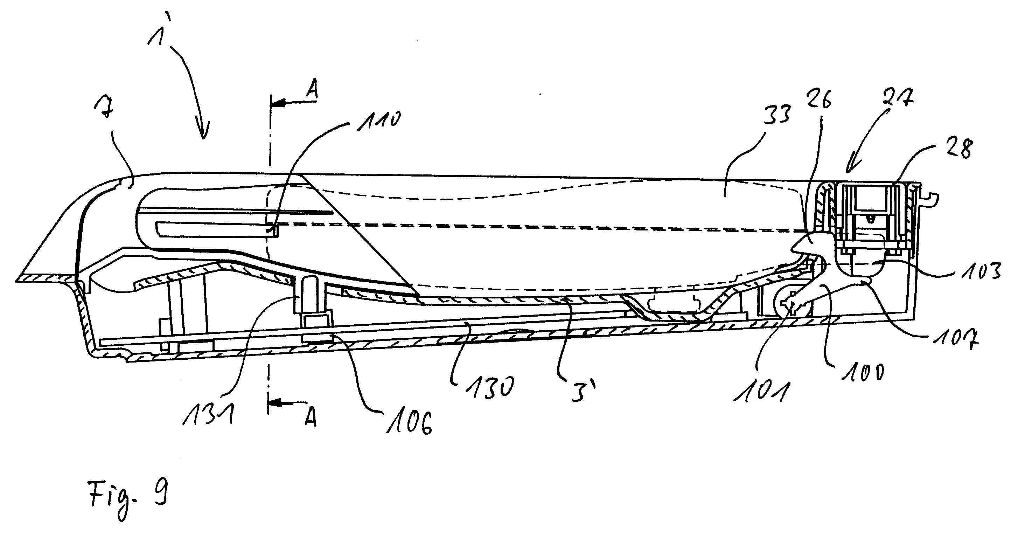

In den Figuren 6 und 7 ist eine perspektivische Ansicht der Haltevorrichtung 1 nach der Erfindung dargestellt. Diese Haltevorrichtung 1 umfaßt ein im wesentlichen plattenartiges Grundelement 2, das sich z. B. auf der Mittelkonsole eines Kraftfahrzeugs oder im Armlehnenbereich befestigen läßt. Hierzu sind geeignete Befestigungsmittel vorgesehen, die nicht im einzelnen dargestellt sind.

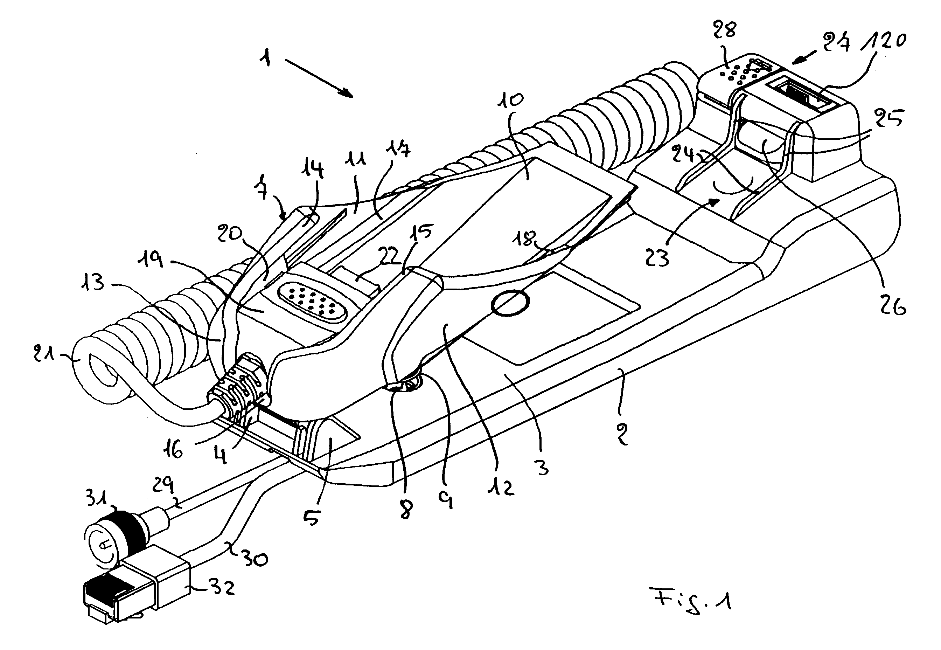

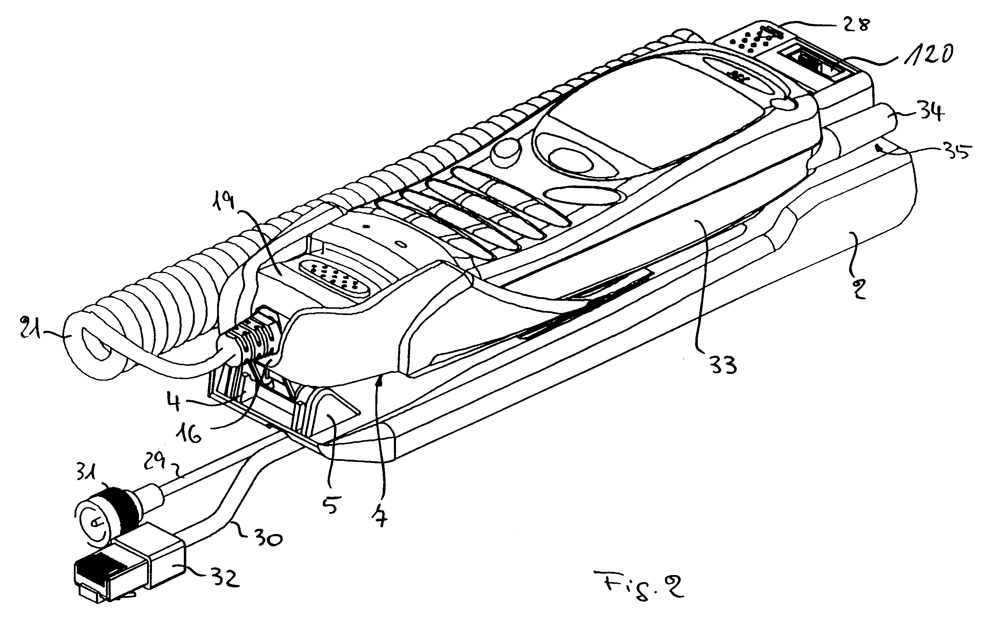

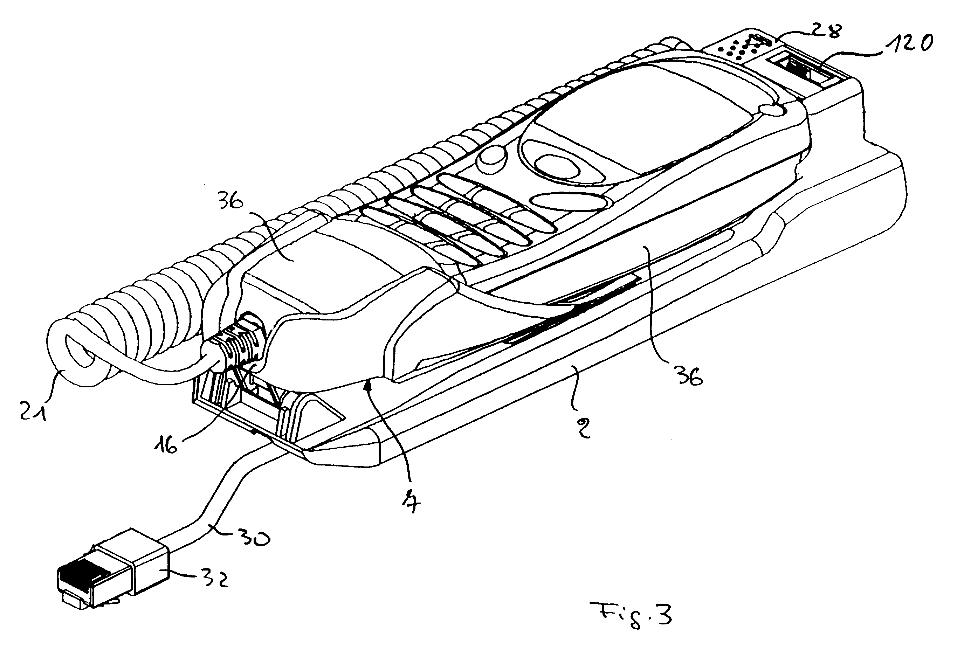

Das Grundelement 2 ist rechteckförmig ausgebildet und trägt auf seiner Oberfläche 3 sowie im Bereich seiner linken Stirnseite in Figur 1 zwei im Abstand voneinander angeordnete Lagerblöcke 4 und 5 zur Lagerung fluchtender Schwenkachsen 6, die parallel zur Stirnkante des Grundelements 2 liegen und mit einem Träger 7 verbunden sind, der um diese Schwenkachsen 6 schwenkbar ist. Die beiden fluchtenden Schwenkachsen 6 bzw. Schwenkachsstummel können auch durch eine einzige durchgehende Schwenkachse ersetzt werden. Der Träger 7 kommt dabei oberhalb der Oberfläche 3 des Grundelements 2 zu liegen und erstreckt sich ausgehend von den Schwenkachsen 6 in Richtung zur anderen Stirnfläche des Grundelements 2.

In der Oberfläche 3 des Grundelements 2 und unterhalb des Trägers 7 befindet sich eine Öffnung 8 zur passenden Aufnahme eines Endes einer Druckfeder 9. Diese Druckfeder 9 stützt sich somit am Grundelement 2 ab und drückt mit ihrem anderen Ende gegen die Unterseite eines Bodens 10 des Trägers 7. Um in diesem Bereich ein Verrutschen der Druckfeder 9 zu verhindern, kann sich an der Unterseite des Trägerbodens 10 ein entsprechender Ansatz befinden, der in die Druckfeder 9 eingreift, die in diesem Fall wendelförmig gewickelt ist. Die Druckfeder 9 ist somit bestrebt, den Träger 7 ständig vom Grundelement 2 wegzudrücken, also entgegen dem Uhrzeigersinn um die Achse 6 in Figur 1.

Die Druckfeder 9 könnte zur Erzielung derselben Wirkung auch durch eine wendelförmig gewickelte Federanordnung (Schenkelfeder) ersetzt werden, die auf der oder den Schwenkachsen 6 liegt und sich mit einem Ende am Grundelement 2 und mit dem anderen Ende am Träger 7 abstützt. Der Druckfeder 9 ist vorteilhafterweise eine Dämpfervorrichtung 9' zugeordnet, die eine gleichmäßige Schwenkbewegung des Trägers 7 gewährleistet.

Der Träger 7 ist schaufelartig ausgebildet und weist zwei Seitenwände 11 und 12 auf, die von den Seitenkanten des Trägerbodens 10 ausgehen, sich in Längsrichtung des Grundelements 2 erstrecken sowie nahezu senkrecht zum Trägerboden 10 verlaufen. Diese Seitenwände 11 und 12 sind im Bereich der Schwenkachsen 6 über einen stirnseitigen Wandbereich 13 des Trägers 7 miteinander verbunden. Die freien Längskanten 14 und 15 der Seitenwände 11 und 12 sind darüber hinaus oberhalb eines vorbestimmten Abstands von der Bodenfläche 10 aufeinander zu umgebogen, wobei zwischen ihnen jedoch noch ein größerer Abstand verbleibt. Diese freien Längskanten 14 und 15 gehen in Richtung zum hinteren Ende des Trägers 7 in eine Öffnung 16 im stirnseitigen Wandbereich 13 über, die sich bis nahe zum Boden 10 des Trägers 7 erstreckt. In Richtung zum freien Ende des Trägers 7 gesehen, nimmt dagegen die Höhe der Seitenwände 11 und 12 stetig ab. Nicht zuletzt befinden sich ferner an den Innenseiten der Seitenwände 11 und 12 mit diesen z. B. einstückig verbundene Führungsleisten 17 und 18, die parallel zum Trägerboden 10 verlaufen.

Im Träger 7 befindet sich ein Steckverbinder 19. Dieser Steckverbinder 19 wird durch die offene Stirnseite des Trägers 7 in diesen eingeführt und bis zum hinteren Trägerbereich geschoben, so daß er gegen den stirnseitigen Wandbereich 13 schlägt und von den Seitenwänden 11 und 12 bzw. verdickten Innenansätzen 20 der Seitenwände 11, 12 gehalten wird. Zwischen den Seitenwänden des Steckverbinders 19 und den verdickten Innenansätzen 20 kann eine Art Nut-/Federverbindung vorhanden sein, um die Höhenlage des Steckverbinders 19 im Träger 7 zu sichern. Am unteren Ende des Steckverbinders 19 links in Figur 1 ist dieser mit einem Kabel 21 fest verbunden, das durch die Öffnung 16 aus dem Träger 7 herausragt, wenn der Steckverbinder 19 in den Träger 7 eingesetzt ist. Das Kabel 21 ist mit seinem anderen Ende an einer Anschlußkontakteinrichtung befestigt, die sich im Bereich der anderen Stirnseite des Grundelements 2 befindet, wie noch ausgeführt wird. An der oberen Seite des Steckverbinders 19 ragt aus diesem eine Anschlußkontaktleiste 22 heraus, auf die eine Anschlußbuchse der Kommunikationseinheit aufgeschoben wird, wenn die Kommunikationseinheit in den Träger 7 eingeführt wird.

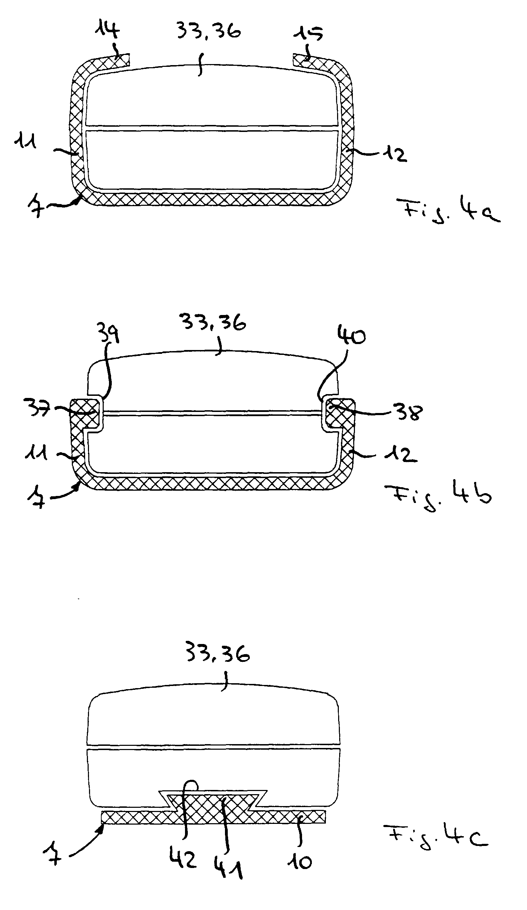

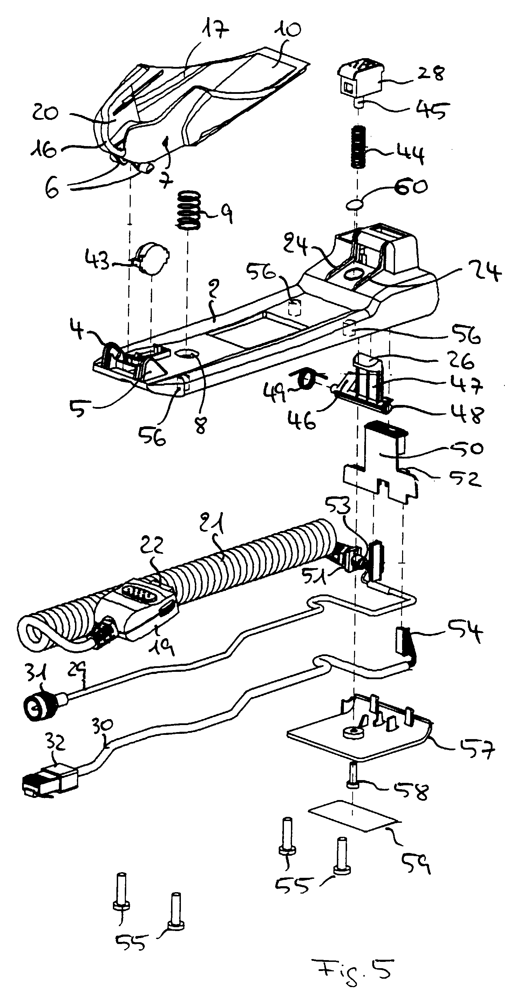

Wie bereits eingangs erwähnt, kann die Kommunikationseinheit ein Mobiltelefon sein, wie es in Figur 2 gezeigt ist. Wird das Mobiltelefon mit seinem unteren Ende in den Träger 7 eingeführt, ragt im Endzustand die Anschlußkontaktleiste 22 in die Anschlußbuchse des Mobiltelefons hinein, die sich an der unteren Stirnseite des Mobiltelefons befindet.

Entsprechend den Figuren 1, 6 und 7 weist die Haltevorrichtung 1 an der in Figur 1 rechten Stirnseite des Grundelements 2 eine Auflage 23 für das in den Träger 7 eingesetzte Mobiltelefon auf. Diese Auflage 23 besteht aus zwei im Abstand voneinander liegenden, winkelförmigen Bügeln mit jeweils horizontalen und vertikalen Schenkeln 24 und 25. Die horizontalen Schenkel 24 dienen zur Unterstützung der Rückwand des Mobiltelefons in seinem oberen Bereich, während die vertikalen Schenkel 25 zur Führung der oberen Stirnwand des Mobiltelefons dienen.

Im Bereich zwischen den vertikalen Schenkeln 25 befindet sich eine Rastnase 26 einer Verriegelungseinrichtung 27, zu der noch ein Entriegelungsknopf 28 gehört. Die Rastnase 26 ist durch Federkraft so vorgespannt, daß sie ständig über die vertikalen Schenkel 25 in Richtung zum Träger 7 herausragt und bei im Träger 7 vorhandenen Mobiltelefon in eine an seiner oberen Stirnseite vorhandene Rastöffnung eingreift, wenn die Rückwand des Mobiltelefons auf den horizontalen Schenkel 24 zu liegen kommt. Durch Herunterdrücken des Entriegelungsknopfs 28 wird die Rastnase 26 entgegen der Federkraft zurückgeführt, so daß sie das Mobiltelefon freigibt.

Die Rastnase 26 ist an einem schwenkbaren Hebel 100 angebracht, der um eine Achse 101 schwenkbar ist. Um die Rastnase 26 gegen die sie vorspannende Federkraft in Figur 6 nach rechts verschwenken zu können, ist ein mit dem Hebel 100 verbundener Betätigungshebel 102 vorgesehen, der beim Herunterdrücken des Entriegelungsknopfes 28 über einen an diesem angebrachten Stift 103 heruntergedrückt wird und dabei eine Schwenkbewegung des Hebels 100 in Figur 6 nach rechts ermöglicht, so daß die Rastnase 26 in eine Freigabestellung bewegt wird.

Mit dem die Rastnase 26 tragenden Hebel 100 ist noch ein weiterer Hebel 104 verbunden, um mit diesem eine gemeinsame Schwenkbewegung auszuführen. Der weitere Hebel 104 wirkt mit einem Betätigungsstift 105 eines Schalters 106 zusammen, um den Schalter 106 ein- und auszuschalten.

Der Schalter 106 ist dabei beispielsweise auf einer Leiterplatte oder Platine 107 montiert, die einen entsprechenden Schaltkreis zur Verbindung eines Mobiltelefons mit einer Freisprechanlage aufweist.

Wie bereits zuvor erwähnt, befindet sich im einfachsten Fall an der gleichen Stirnseite des Grundelements 2, an der auch die Verriegelungseinrichtung 27 vorhanden ist, nur die Kontakteinrichtung für das Kabel 21. Dort ist das Kabel 21 fest mit der Kontakteinrichtung verbunden bzw. verlötet. Darüber hinaus sind mit der Kontakteinrichtung im vorliegenden Fall zwei weitere Kabel fest verbunden, die an geeigneter Stelle aus der Haltevorrichtung 1 herausgeführt werden, um die Haltevorrichtung 1 elektrisch mit weiteren Einrichtungen verbinden zu können. Es handelt sich dabei insbesondere um ein Antennenkabel 29 sowie um ein Ladekabel 30. Beide Kabel 29, 30 sind an ihren freien Enden mit geeigneten Steckern 31, 32 verbunden. Ist das Mobiltelefon in den Träger 7 eingesetzt, so kann es über die Anschlußkontaktleiste 22, das Kabel 21 und das Kabel 29 mit einem Antennenanschluß verbunden werden, etwa mit einer Kraftfahrzeugantenne. Außerdem läßt es sich über die Anschlußkontaktleiste 22, das Kabel 21 und das Kabel 30 mit einer Ladestation verbinden, die sich irgendwo im Fahrzeug befinden kann.

In dem bevorzugten Ausführungsbeispiel ist der Kontakteinrichtung zur Verbindung des Kabels 21 mit den Kabeln 29, 30 der auf der Platine 107 angeordnete Schaltkreis zugeordnet, wobei die Kabel 21 und 30 entsprechende Leitungen zur Verbindung des Mobiltelefons mit der Freisprechanlage aufweisen, die über den Schaltkreis auf der Platine 107 je nach der Stellung des Schalters 106 zu oder abgeschaltet wird.

Zuletzt kann vorteilhafterweise auch eine Verriegelungseinrichtung direkt zwischen Grundelement 2 und Träger 7 vorhanden sein, um den Träger 7 auch dann in seiner zum Grundelement 2 hin verschwenkten Stellung an diesem verriegeln zu können, wenn sich kein Mobiltelefon bzw. Handapparat im Träger befindet. Diese Verriegelungseinrichtung zwischen Grundelement 2 und Träger 7 kann eine sogenannte Push-Push Verriegelungseinrichtung sein, die beim ersten Andrücken des Trägers 7 gegen die Grundplatte 2 diesen an der Grundplatte 2 hält und beim zweiten Andrücken freigibt.

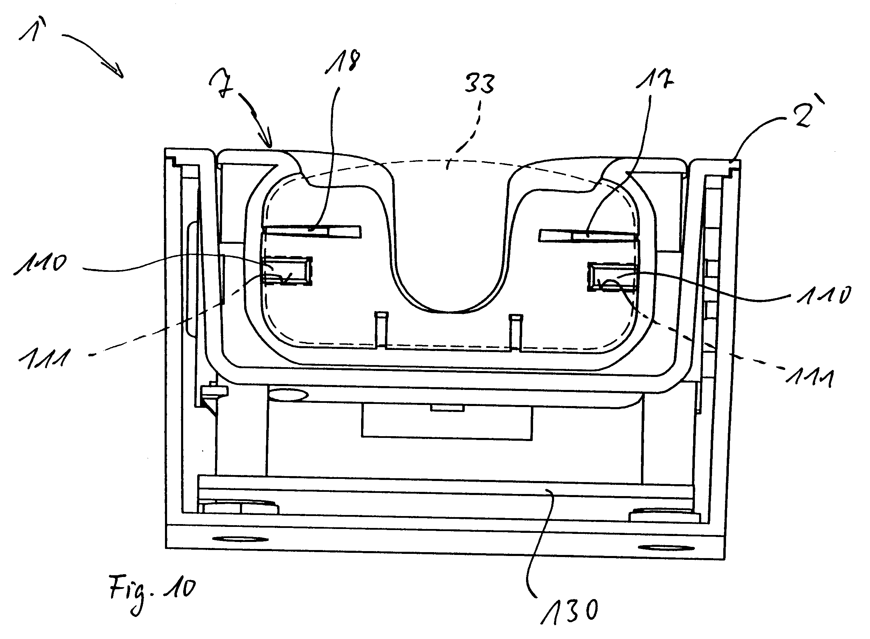

Die Figur 2 zeigt die Haltevorrichtung nach Figur 1 bei eingesetztem Mobiltelefon 33, das mittels der Verriegelungseinrichtung 27 am Grundelement 2 verriegelt ist. Die Rastnase 26 greift jetzt in die stirnseitige obere Öffnung des Mobiltelefons 33 ein, während gleichzeitig durch den nach unten geschwenkten Träger 7 die Druckfeder 9 maximal vorgespannt ist. Durch die federvorgespannte Rastnase 26 der Verriegelungseinrichtung 27 wird das in den Träger 7 eingesetzte Mobiltelefon gegen Anschlagklötze 110 gedrückt, die in entsprechende Ausnehmungen 111 (siehe auch Figur 10) in der unteren Stirnseite des Mobiltelefons 33 eingreifen. Während die stirnseitige obere Öffnung des Mobiltelefons 33, in die die Rastnase 26 eingreift, vorzugsweise in der Mitte angeordnet ist, sind die stirnseitigen unteren Ausnehmungen 111 seitlich angeordnet. Es ergibt sich somit eine zuverlässige 3. Halterung des Mobiltelefons 33 in der Halteeinrichtung 1, die es ermöglicht, das Mobiltelefon 33 so im Träger 7 zu halten, daß es mit Abstand zum Boden 10 und zu den Seitenwänden 11, 12 darin gehalten ist.

Durch die beschriebene 3. Halterung, bei der das Mobiltelefon von der Rastnase 26 gegen die Anschlagklötze 110 gedrückt wird, wird gewährleistet, daß auch bei starken Vibrationen im Fahrzeug die Oberfläche des Mobiltelefons nicht an der Haltevorrichtung 1 reiben kann. Dadurch wird der Abrieb an der Oberfläche des Mobiltelefons vermieden, der sonst zu unerwünschten Gebrauchsspuren führen würde.

Darüber hinaus sind die Anschlagklötze 110 und die diese aufnehmenden Ausnehmungen 111 am Mobiltelefon 33 so ausgebildet, daß bereits nach dem Einsetzen des Mobiltelefons 33 in den Träger 7 das Mobiltelefon 33 durch die Abstützung an den Anschlagklötzen sicher im Träger 7 gehalten ist.

Wird der Entriegelungsknopf 28 nach unten gedrückt, also in Richtung zum Grundelement 2, so gibt die Rastnase 26 das Mobiltelefon 33 frei, so daß jetzt die Druckfeder 9 den Träger 7 und mit ihm das Mobiltelefon 33 nach oben bzw. weg vom Grundelement 2 drücken kann. Um diese Verschwenkbewegung nicht zu schnell ablaufen zu lassen, ist zwischen Träger 7 und Grundelement 2 noch das Bewegungsdämpfungselement 9' vorgesehen, beispielsweise ein Öldämpfer. Durch ihn läßt sich die Verschwenkbewegung des Trägers 7 so steuern, daß diese z. B. zu Anfang schnell und in Richtung der Verschwenkendstellung langsamer erfolgt.

Wenn also das Mobiltelefon 33 in der in Figur 2 und 7 gezeigten Lage ist, wird die Rastnase 27 in einer Stellung gehalten, in der sie den Betätigungshebel 104 vom Stift 105 des Schalters 106 weghält, so daß die Freisprechanlage eingeschaltet ist. Sobald das Mobiltelefon 33 durch Betätigung des Entriegelungsknopfes 28 freigegeben wird und nach oben schwenkt, wird automatisch die Rastnase 26 ein wenig nach links gekippt und dabei wird der Hebel 104 nach oben gegen den Stift 105 des Schalters 106 gepreßt. Der Schalter 106 schaltet nun von der Freisprechanlage auf die akustischen Einrichtungen des Mobiltelefons 33, so daß der Anwender direkt über das Mobiltelefon 33 telefonieren kann.

Es sei noch darauf hingewiesen, daß es zusätzlich möglich ist, die Führungsleisten 17 und 18 in entsprechende seitliche Längsschlitze des Mobiltelefons 33 an seinem unteren Ende eingreifen zu lassen, so daß das Mobiltelefon 33 damit beim Einführen in den Halter noch sicherer geführt und zusätzlich gehalten ist. Insgesamt ist der Träger 17 so ausgestaltet, daß bei eingesetztem Mobiltelefon 33 letzteres auch dann noch sicher durch den Träger 7 positioniert wird, wenn dieser sich in seiner am weitesten vom Grundelement 2 wegverschwenkten Stellung befindet. Erschütterungen, wie sie z. B. während der Fahrt des Kraftfahrzeugs auftreten, können somit nicht mehr zu einem Herausfallen des Mobiltelefons 33 aus dem Träger 7 führen, wenn dieser vom Grundelement 2 weggeschwenkt ist.

Es sei noch erwähnt, daß für eine aus dem Mobiltelefon 33 herausragende Antenne 34 genügend Platz neben der Verriegelungseinrichtung 27 vorhanden ist. Entsprechender Raum läßt sich durch eine geeignete Ausnehmung 35 im Grundelement 2 schaffen.

Ferner ist noch darauf hinzuweisen, daß am rechten stirnseitigen Ende der Haltevorrichtung 1 neben dem Entriegelungsknopf 28 der Verriegelungseinrichtung 27 eine Steckeinrichtung 120 vorgesehen ist, um eine Verbindung über das Kabel 21 und den Stecker 22 zwischen dem Mobiltelefon 33 und beispielsweise einem Laptop herzustellen, so daß über das Mobiltelefon eine Datenkommunikation durchgeführt werden kann.

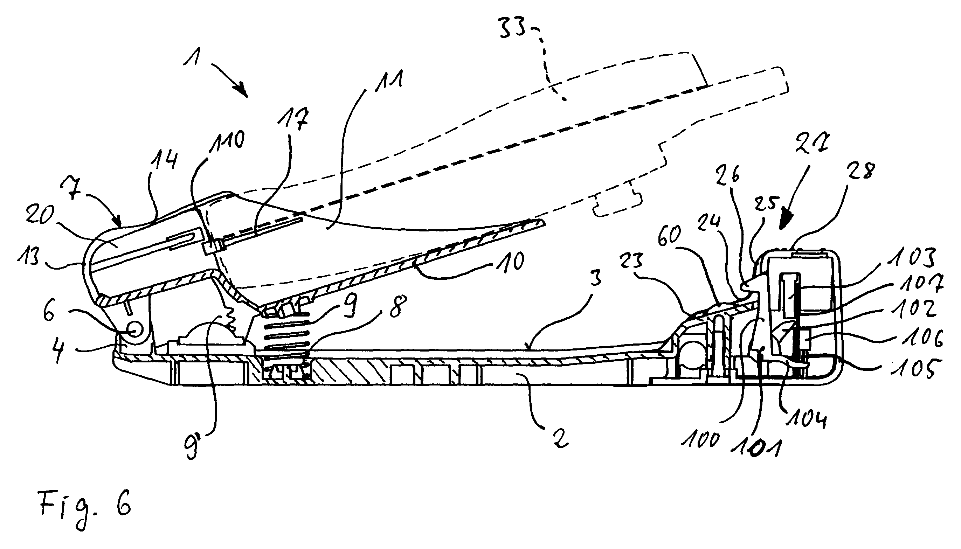

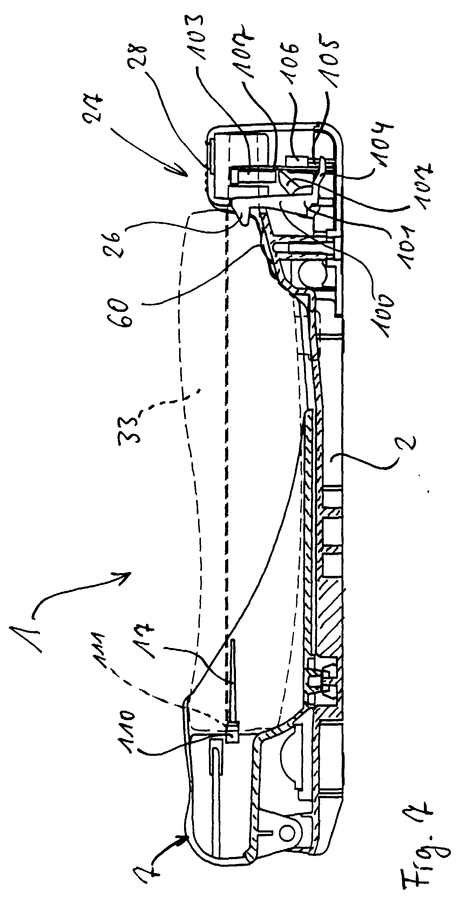

Die Figur 3 zeigt eine Haltevorrichtung 1 für einen Handapparat 36 einer aus Handapparat 36 und Feststation bestehenden Mobilfunkanlage. Für den Einsatz in einem Kraftfahrzeug kann die Feststation an geeigneter anderer Stelle im Kraftfahrzeug vorhanden sein und die erforderlichen Sende-/Empfangseinrichtungen enthalten. Der Handapparat 36 ist dann an seinem unteren Ende direkt mit dem Kabel 21 fest verbunden, das an die bereits genannte Kontakteinrichtung am oberen Stirnende des Grundelements 2 angeschlossen ist, wobei von dieser Kontakteinrichtung jetzt nur noch ein Kabel 30 ausgeht, das mit der Feststation verbindbar ist. Dieses Kabel 30 und das Kabel 21 dienen dann nur noch zur Übertragung von Information zwischen dem Handapparat 36 und der Feststation.

Ansonsten sind gleiche Elemente wie in den Figuren 1 und 2 mit denselben Bezugszeichen versehen und werden nicht nochmals beschrieben.

Unterschiedlich zu Figur 1 ist in Figur 3 nur, daß der Handapparat 36 an seinem unteren Ende eine Form aufweist, die der äußeren Form des Steckverbinders 19 entspricht. In den anderen Außenbereichen sind Mobiltelefon 33 und Handapparat 36 gleich ausgebildet, so daß sich für sie derselbe Träger 7 und dasselbe Grundelement 2 verwenden lassen.

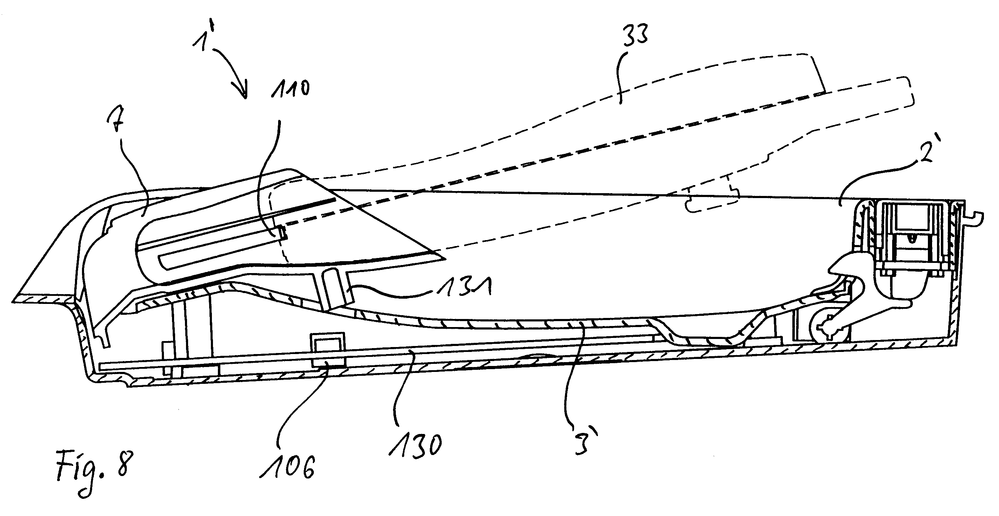

Die Figuren 4a bis 4c zeigen verschiedene Querschnittsformen von Träger 7 und Mobiltelefon 33 bzw. Handapparat 36.

Gemäß Figur 4a umgreifen obere Längskanten 14, 15 an den Seitenwänden 11, 12 des Trägers 7 noch das Mobiltelefon 33 bzw. den Handapparat 36.

In Figur 4b sind dagegen die Seitenwände 11, 12 nicht so hoch ausgebildet und weisen statt dessen nach innen weisende Ansätze 37, 38 an ihren oberen Längskanten auf. Diese greifen in entsprechende Längsnuten 39, 40 an den seitlichen Wänden von Mobiltelefon 33 bzw. Handapparat 36 ein, um für einen sicheren Halt zu sorgen. Vorteilhaft ist, daß in diesem Fall der Träger 7 eine geringere Höhe aufweist. Bei dieser Ausgestaltung dienen anstelle der beschriebenen Anschlagklötze 110 die stirnseitigen freien Enden der Ansätze 37, 38 als Anschlagmittel zum Halten des Mobiltelefons 33 oder des Handapparats 36.

Beim Ausführungsbeispiel nach Figur 4c weist der Träger 7 keine Längsseiten auf, sondern besteht nur aus dem Trägerboden 10 und einer an der oberen Bodenfläche vorhandenen, schwalbenschwanzförmigen Leiste 41, die in Längsrichtung des Trägerbodens 10 und mittig zu diesem verläuft. An der hinteren Hauptfläche des Mobiltelefons 33 bzw. des Handapparats 36 ist dann eine für die schwalbenschwanzförmige Leiste 41 passende Längsnut 42 vorgesehen, die sich ebenfalls in Längsrichtung des Mobiltelefons 33 bzw. des Handapparats 36 erstreckt. Hierbei kann das stirnseitige Ende der Leiste 41 als Anschlag- und Haltemittel dienen. In diesem Fall ist von Vorteil, daß ein im wesentlichen schmaler Träger 7 erhalten wird, da die Seitenwände entfallen.

In der Figur 5 ist eine Explosionsdarstellung der Haltevorrichtung nach Figur 1 gezeigt. Auch hier sind wiederum dieselben Elemente mit denselben Bezugszeichen versehen, so daß sie nicht nochmals beschrieben werden.

Zusätzlich ist in Figur 5 noch als Dämpfungseinrichtung ein Öldämpfer 43 für die Bewegungssteuerung des Trägers 7 zu erkennen. Er kommt zwischen Grundelement 2 und Träger 7 zu liegen und wird mit beiden Elementen in geeigneter Weise verbunden.

Zu erkennen ist in Figur 5 noch eine Feder 44, die den am Grundelement 2 gesicherten Entriegelungsknopf 28 ständig nach oben drückt und über einen Ansatz 45 an der unteren Fläche des Entriegelungsknopfs 28 greift. Beim Herunterdrücken des Entriegelungsknopfs 28 schlägt der Ansatz 45 auf eine z. B. unter 45° zu seiner Längsrichtung liegende Schrägfläche 46 eines mit der Rastnase 26 einstückig verbundenen Halteelements 47. Dieses Halteelement 47 ist um eine Achse 48 schwenkbar, auf der eine Spiralfeder 49 sitzt, durch die die Rastnase 26 bzw. das Halteelement 47 entgegen dem Uhrzeigersinn in Figur 5 in Richtung zum Träger 7 vorgespannt wird. Die Schrägfläche 46 verläuft dabei so, daß bei ihrer Beaufschlagung durch den nach unten weisenden Ansatz 45 das Halteelement 47 im Uhrzeigersinn in Figur 5 um dessen Drehachse 48 gedreht wird. Die Rastnase 26 bewegt sich somit vom Träger 7 weg.

Ein Dämpfungskissen 60 kommt zwischen den horizontalen Schenkeln 24 der Auflage 23 zu liegen und dient zur vibrationsfreien Lagerung des Mobiltelefons bzw. Handapparats auf dem Grundelement 2.

Die bereits mehrfach erwähnte Kontakteinrichtung für das Kabel 21 befindet sich im Bereich des Grundelements 2 hinter der Verriegelungseinrichtung und weist eine Leiter- bzw. Anschlußplatte 50 auf, an der ein Anschlußkontakt 51 für das Antennenkabel 29 und ein Anschlußkontakt 52 für das Ladekabel 30 befestigt sind. Dabei wird das Antennenkabel 29 über einen Stecker 53 mit dem Anschlußkontakt 51 verbunden, während das Ladekabel über einen Stecker 54 mit dem Anschlußkontakt 52 verbunden wird.

Mit Hilfe von Schrauben 55 läßt sich das Grundelement 2 auf einer Unterlage befestigen, wobei zu diesem Zweck die Schrauben 55 in geeignete Sacklochgewinde 56 hineingeschraubt werden können, die sich an der Bodenfläche des Grundelements 2 befinden.

Der die Verriegelungseinrichtung und die Kontakteinrichtung aufnehmende Raum innerhalb des Grundelements 2 ist bodenseitig durch eine Abdeckplatte 57 verschlossen, die sich mittels einer Schraube 58 am Grundelement 2 sichern läßt. Die Schraube 58 ihrerseits kann durch ein Typenschild 59 gegen Herausfallen gesichert werden.

In Figur 8 und 9 ist eine weitere Haltevorrichtung 1' dargestellt, bei der das Grundelement 2' Trogförmig ausgebildet ist. Der Träger 7 ist in nicht näher dargestellter Weise schwenkbar am Grundelement 2' angebracht und wird mittels einer geeigneten Federanordnung in seine relativ zum Grundelement 2' nach oben geschwenkte Stellung (siehe Figur 8) vorgespannt. Zur Halterung des Mobiltelefons im Träger 7 sind Anschlagklötze 110 vorgesehen, die in entsprechende Ausnehmungen 111 (siehe Figur 10) eingreifen, die am unteren stirnseitigen Ende des Mobiltelefons 33 seitlich ausgebildet sind.

Um ein im Halter 7 eingesetztes Mobiltelefon 33 in der in Figur 9 gezeigten eingeschwenkten Lage zu halten, ist eine Verriegelungseinrichtung 27 vorgesehen, die, wie oben bereits beschrieben, eine Rastnase 26 aufweist, mit der das Mobiltelefon 33 gegen die Halteklötze 110 fest vorgespannt wird, um eine sichere 3. Fixierung zu erhalten, durch die verhindert wird, daß die Oberfläche des Mobiltelefon 33 an Teilen der Haltevorrichtung 1' reibt.

Besonders vorteilhaft ist es hierbei, wenn, wie auch bei der oben beschriebenen Haltevorrichtung 1, zwischen den das Mobiltelefon 33 umgebenden Elementen des Trägers 7 und der Oberfläche des in den Träger 7 eingesetzen Mobiltelefons 33 mit Ausnahme der Anschlagklötze 110 ein Abstand oder Zwischenraum vorgesehen ist.

In der in den Figuren 8, 9 und 10 dargestellten Haltevorrichtung 1' ist unterhalb einer Bodenschale 3' eine Leiterplatte 130 angeordnet, auf der beispielsweise eine Ladeelektronik für eine wiederaufladbare Batterie des Mobiltelefons 33 angeordnet ist. Daneben ist auf der Leiterplatte 130 auch ein Schalter 106 angebracht, der die Verbindung des Mobiltelefons 33 mit einer Telefon-Freisprechanlage in einem Fahrzeug herstellt oder unterbricht. Hierzu ist die Freisprechanlage, die beispielsweise aus einem im Bereich des Armaturenbretts oder der Sonnenblende angebrachten Mikrofon und einem Lautsprecher besteht, in geeigneter Weise mit dem Schalter 106 auf der Leiterplatte 130 verbunden. Neben dem Schalter kann dabei auch eine entsprechende Schnittstellenschaltung vorgesehen sein.

Befindet sich der Träger 7 in der in Figur 8 gezeigten nach oben geschwenkten Stellung, so ist ein am Träger 7 angebrachter Stift oder Zapfen 131 außer Eingriff mit dem Schalter 106 und die Freisprechanlage ist ausgeschaltet, unabhängig davon ob ein Mobiltelefon 33 in den Träger 7 eingesetzt ist oder nicht.

Sobald nach dem Einsetzen eines Mobiltelefons 33 in den Träger 7 das Mobiltelefon mit dem Träger in die in Figur 9 gezeigte eingeschwenkte Stellung bewegt wird, tritt der Zapfen 131 mit dem Schalter 106 in Eingriff und betätigt diesen so, daß das Mobiltelefon 33 mit der Freisprechanlage verbunden ist. Sobald nach Betätigung des Entriegelungsknopfes 28 die Rastnase 26 aus der entsprechenden Öffnung in der oberen Stirnseite des Mobiltelefons 33 herausbewegt ist und der Träger 7 das Mobiltelefon 33 wieder in die in Figur 8 dargestellte Stellung zurückschwenkt, ist die Freisprechanlage auch wieder ausgeschaltet, da der Zapfen 131 den Schalter 106 freigibt.

## Patentansprüche

1. Haltevorrichtung (1) für eine Kommunikationseinheit (33, 36), mit
- einem Grundelement (2),
- einem am Grundelement (2) schwenkbar angelenkten Träger (7), der mittels Federkraft vom Grundelement (2) wegschwenkbar ist, und auf den sich die Kommunikationseinheit (33, 36) mit ihrem einen Ende gegen Anschlagmittel (110) aufschieben läßt, die die Kommunikationseinheit (33, 36) halten, und
- einer am Grundelement (2) vorhandenen Verriegelungseinrichtung (27) zur Verriegelung des anderen Endes der Kommunikationseinheit (33, 36) bei gegen das Grundelement (2) verschwenktem Träger (7), wobei die Verriegelungseinrichtung (27) die Kommunikationseinheit (33, 36) gegen die Anschlagsmittel (110) drückt.

2. Haltevorrichtung nach Anspruch 1, **dadurch gekennzeichnet,** daß zwischen dem Grundelement (2) und einem Boden (10) des Trägers (7) eine Druckfedereinrichtung (9) angeordnet ist.

3. Haltevorrichtung nach Anspruch 1 oder 2, **dadurch gekennzeichnet,** daß der Druckfedereinrichtung (9) eine Dämpfungseinrichtung (9', 43) zugeordnet ist, die die Schwenkbewegung des Trägers (7) dämpft.

4. Haltevorrichtung nach Anspruch 1 bis 3, **dadurch gekennzeichnet,** daß als Anschlagmittel zwei quer zur Längsrichtung und parallel zur Hauptebene der Kommunikationseinheit (33, 36) voneinander beabstandete Anschlagelemente (110) vorgesehen sind.

5. Haltevorrichtung nach Anspruch 4, **dadurch gekennzeichnet,** daß die Anschlagelemente (110) seitlich in entsprechende Ausnehmungen (111) der Kommunikationseinheit (33, 36) eingreifen.

6. Haltevorrichtung nach einem der Ansprüche 1 bis 5, **dadurch gekennzeichnet,** daß in Richtung zur Verriegelungseinrichtung (27) verlaufende Seitenwände (11, 12) des Trägers (7) die Kommunikationseinheit (33, 36) nur zum Teil umgreifen, wobei vorzugsweise zwischen den Seitenwänden (11, 12) des Trägers (7) und der Kommunikationseinheit (33, 36) jeweils ein Zwischenraum vorgesehen ist.

7. Haltevorrichtung nach Anspruch 6, **dadurch gekennzeichnet,** daß freie Längskanten (14, 15) der Seitenwände (11, 12) über der Kommunikationseinheit (33, 36) zu liegen kommen.

8. Haltevorrichtung nach Anspruch 7, **dadurch gekennzeichnet,** daß die Seitenwände (11, 12) mit nach innen weisenden Längsleisten (17, 18) versehen sind.

9. Haltevorrichtung nach Anspruch 6, **dadurch gekennzeichnet,** daß freie Längskanten (14, 15; 37, 38) der Seitenwände (11, 12) in seitliche Längsschlitze (39, 40) der Kommunikationseinrichtung (33, 36) greifen.

10. Haltevorrichtung nach Anspruch 6,7 oder 8, **dadurch gekennzeichnet,** daß die Hohe der Seitenwände (11, 12) in Richtung zum freien Ende des Trägerbodens (10) abnimmt.

11. Haltevorrichtung nach einem der Ansprüche 6 bis 10, **dadurch gekennzeichnet,** daß eine Stirnwand (13) des Trägers (7) eine bis zu ihrer freien Kante verlaufende Öffnung (16) aufweist.

12. Haltevorrichtung nach Anspruch 1, 2 oder 3, **dadurch gekennzeichnet,** daß der Träger (7) wenigstens aus dem Trägerboden (10) besteht, auf dessen vom Grundelement (2) abgewandten Seite eine sich in Richtung der Verriegelungseinrichtung (27) erstreckende, schwalbenschwanzförmige Leiste (41) angeordnet ist.

13. Haltevorrichtung nach einem der Ansprüche 1 bis 12, **dadurch gekennzeichnet,** daß das Grundelement (2) im Bereich der Verriegelungseinrichtung (27) eine Auflage (23) für das andere Ende der Kommunikationseinheit (33, 36) aufweist.

14. Haltevorrichtung nach einem der Ansprüche 1 bis 13, **dadurch gekennzeichnet,** daß die Verriegelungseinrichtung (27) eine federnd vorgespannte Rastnase (26) aufweist, so daß sie die Kommunikationseinheit (33, 36) gegen die Anschlagmittel (110) drückt.

15. Haltevorrichtung nach Anspruch 14, **dadurch gekennzeichnet,** daß die Rastnase (26) in eine Rastausnehmung in der Stirnseite der Kommunikationseinheit (33, 36) eingreift.

16. Haltevorrichtung nach einem der Ansprüche 14 oder 15, **dadurch gekennzeichnet,** daß die Rastnase (26) zusammen mit den Anschlagelementen eine 3. Halterung für die Kommunikationseinheit (33, 36) bildet.

17. Haltevorrichtung nach Anspruch 14, 15 oder 16, **dadurch gekennzeichnet,** daß die Verriegelungseinrichtung (27) mit einem Entriegelungsknopf (28) zur Betätigung der Rastnase (26) versehen ist.

18. Haltevorrichtung nach einem der Ansprüche 1 bis 17, **dadurch gekennzeichnet,** daß der Träger (7) einen Steckverbinder (19) zur Herstellung wenigstens einer elektrischen Verbindung zwischen ihm und der Kommunikationseinheit (33) trägt.

19. Haltevorrichtung nach Anspruch 18, **dadurch gekennzeichnet,** daß der Steckverbinder (19) über ein Kabel (21) mit einem Anschluß an der Haltevorrichtung (1) verbunden ist.

20. Haltevorrichtung nach einem der Ansprüche 1 bis 19, **dadurch gekennzeichnet,** daß die Kommunikationseinheit ein Mobiltelefon (33) ist.

21. Haltevorrichtung nach einem der Ansprüche 1 bis 17, **dadurch gekennzeichnet,** daß sie einen elektrischen Anschluß aufweist, mit dem die Kommunikationseinheit (36) über ein Kabel (21) fest verbindbar ist.

22. Haltevorrichtung nach Anspruch 21, **dadurch gekennzeichnet,** daß die Kommunikationseinheit ein Handapparat (36) einer Mobiltelefonanlage ist.

23. Haltevorrichtung nach einem der Ansprüche 19 bis 22, **dadurch gekennzeichnet,** daß am Grundelement (2) ein Schaltmittel (106) vorgesehen ist, das eine über das Kabel (21) mit der Kommunikationseinheit (33, 36) verbundene Funktionseinrichtung in Abhängigkeit von der Stellung einer im Träger (7) angeordneten Kommunikationseinheit (33, 36) ein- oder ausschaltet.

24. Haltevorrichtung nach Anspruch 23, **dadurch gekennzeichnet,** daß das Schaltmittel (106) ein von einem Schaltzapfen (131) am Träger (7) betätigbarer Schalter (106) ist.

25. Haltevorrichtung nach Anspruch 23, **dadurch gekennzeichnet,** daß das Schaltmittel (106) von der Verriegelungseinrichtung (27) beaufschlagbar ist.

26. Haltevorrichtung nach Anspruch 25, **dadurch gekennzeichnet,** daß die Verriegelungseinrichtung (27) einen gemeinsam mit der Rastnase (26) verschwenkbaren Hebel (104) aufweist, der einen Schalter (106) betätigt.
